# EUROPEAN PATENT SPECIFICATION

(11) **EP 3 069 943 B1**
(45) Date of publication and mention of the grant of the patent: **31.07.2019**
(21) Application number: 13897344.1
(22) Date of filing: 12.11.2013
(51) Int. Cl.: B60S 3/04

(54) **MACHINE FOR AUTOMATICALLY WASHING VEHICLE WHEELS**
MASCHINE ZUM AUTOMATISCHEN WASCHEN VON FAHRZEUGRÄDERN
MACHINE POUR LE LAVAGE AUTOMATIQUE DE ROUES DE VÉHICULES

(43) Date of publication of application: 21.09.2016
(73) Proprietor: Ibasan S.A., 25310 Agramunt (Lérida) (ES)
(72) Inventor: IBARZ RALUY, Juan, E-25310 Agramunt (Lérida) (ES)
(74) Representative: Herrero & Asociados, S.L.
(86) International application number: PCT/ES2013/070794
(87) International publication number: WO 2015/071505

(56) References cited:
- EP-A1- 2 332 793
- EP-A1- 2 653 358
- WO-A1-90/11210
- ES-A2- 2 049 582
- ES-U- 1 071 957
- FR-A1- 2 974 779
- DATABASE WPI Week 200355, Derwent Publications Ltd., London, GB; Class P43, AN 2003-583207, XP055292362 & JP 2003 212097 A (KISOO KK) 30 July 2003

## Description

### OBJECT OF THE INVENTION

The present invention relates to a machine for automatically washing vehicle wheels, which is designed to carry out its washing functions automatically, and which incorporates a digital screen including a wide range of functions that allow the user to control and regulate the washing times and cycles, wash with or without detergent and carry out several operating functions the machine is designed to perform.

The object of the invention is not only to perform the function of automatically washing all types of vehicle wheels, but also to enable all of the functions of the machine to be digitally controlled.

### BACKGROUND OF THE INVENTION

The invention patent P 9101990 by the same applicant describes a machine for automatically washing vehicle wheels, made up of a mount on which a washing chamber is placed with the necessary configuration and dimensions to hold a wheel, complemented by a control module in a side compartment of the washing chamber, being a washing chamber which incorporates two rotatable wheels and one drive wheel in order to rotate the wheel through its own rotation, being completed with spray nozzles to spray water with detergent and lateral brushes that perform the cleaning of the lateral surface of the wheel, all done with through an electric motor in order to activate the drive roller, and an electrical pump to pump the liquid and cleaning detergent, being completed with an air intake for pressurized air to dry the wheel and timers to automatically regulate the wash and dry cycles.

Although the machine described in the invention patent 9101990 efficiently performs its function, it nevertheless requires a switch for each one of the functions, while the motor pump on the machine increases the weight of the machine, and given that the machine is designed to be moved to any area of a wheel workshop, it requires more work to move from one place to another or to transport it to and from the workshop.

On the other hand, Spanish utility model ES1071957U relates to a machine for washing vehicle wheels according to the preamble of claim 1.

### DESCRIPTION OF THE INVENTION

The machine of this invention, based mainly on the description in the previous section, has the unique feature of including a touch screen by which all of the functions of the machine, and the operation of the machine, may be controlled digitally, since the machine is digitalized.

With regard to the structural characteristics of the machine, it has been designed with a series of innovations, including means to adjust the height of the cleaning brushes, as well as the damper cylinders to facilitate the opening, maintenance and closure of the door to the washing chamber, also including means to regulate the height of the cleaning brushes, made up of a geared motor combined with a sliding cylinder and a lifting cylinder, associated with a swivel mount and a sliding lever. The wheel is washed as it is on the rollers.

It also has a reduction motor to activate one of the brushes, since in this case both brushes are motorized, such that by activating one of them using the aforementioned motor, the other is activated by its transmission.

In turn, the touch screen has lights to indicate the power supply to the screen, the power supply to a CPU connected to it and communication between the screen and a PLC, independent from the tactile buttons that correspond to different functions of the machine, such as a stop button to stop the washer, a configuration button, a button for washing without detergent, a button for positioning the brushes, etc.

Moreover, the machine is designed to include a direct outlet for electrical connection, which may be a three-phase current of 220 v or 380 v, the former with a transformer, also including a connection to a pneumatic system that supplies pressurized air for the machine to function correctly, a connection for the hydraulic system, corresponding to a direct connection to the water supply network and a connection to a draining means through a flexible tube for draining the water used in the wash.

With regard to the touch screen as a fundamental characteristic of the machine of the invention, it is worth noting that the touch screen is backlit, making it easy to read even in areas with poor lighting, with access to the wash and dry times and the ability to see and control these times, as well as the operating hours, number of washes and any other service provided by the machine.

The incorporation of a PLC, with a fieldbus for input and output modules for activating the devices, is complemented by a COM for the communication of the touch screen, with all of the data and programs stored in EPROM and RAM memories.

### DESCRIPTION OF THE DRAWINGS

As a complement to the description made below, and for the purpose of helping to make the characteristics of the invention more readily understandable, this specification is accompanied by a set of drawings that form an integral part thereof and whose figures, by way of illustration and not limitation, represent the following:
Figure 1.- Shows a representation of a general viewpoint of the machine for automatically washing vehicle wheels, subject matter of the present invention.
Figure 2 - Shows a front perspective view of the same machine represented in the previous figure, with the cover of the washing chamber open and without a side cover.
Figure 3- Shows a perspective view of the opposite side of the same machine represented in the previous figure.
Figure 4 - Shows a front perspective view of the same machine, without the cover of the washing chamber and without a side cover.
Figure 5- Shows a front view of the touch screen, as well as the lights and grids that correspond to different function of the machine.

### PREFERRED EMBODIMENT OF THE INVENTION

As can be seen in the figures, the machine of the invention is made up of a mount (5), on which there is a washing chamber (8) with a cover (2), and pneumatic dampers (not shown), such that this chamber (8) will have an appropriate configuration and dimensions to hold a wheel of a vehicle to be washed automatically, the wheel being supported vertically on a pair of rollers, one that is rotatable through a motor (29) that activates, by means of shaft of the same roller, the brush (19) of the washing chamber, through the transmission of a belt pulley. Likewise, the wheel is laterally supported on guide rollers (35) and the roller (48) rotates freely without traction.

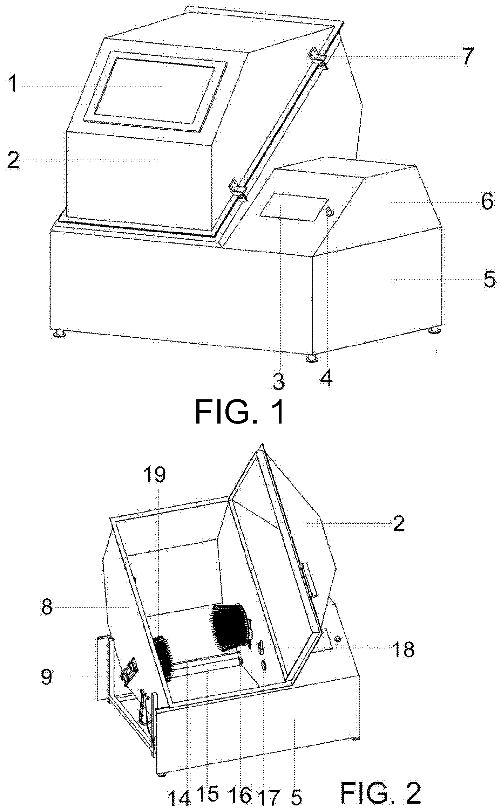

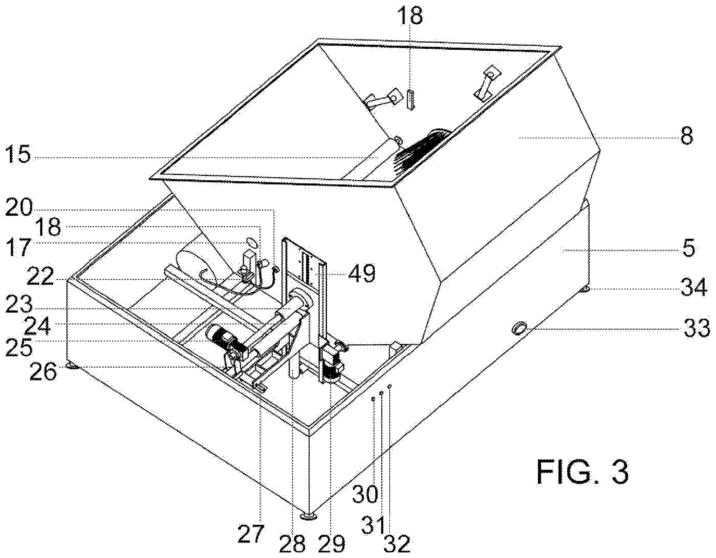

In the interior of the washing chamber (8), in addition to the corresponding nozzles for water spray (18) and, if desired, detergent (20), as well as a drying tube (14), there is a pair of lateral and internal brushes (19 and 16) facing each other, as shown in figure 2, each one activated by a motor (25 and 29) whose height may be adjusted by means of a slider (27), the base of the slider (49), a sliding cylinder (24) and a lifting cylinder (28), as is clearly represented in figure 3, such that one of the brushes is activated by the motor (25) through the respective shaft that is guided by the hub (23) and associated to the sliding lever (26). The lifting cylinders (28) and the slider (24) are associated with the air regulator (22) so that they function properly.

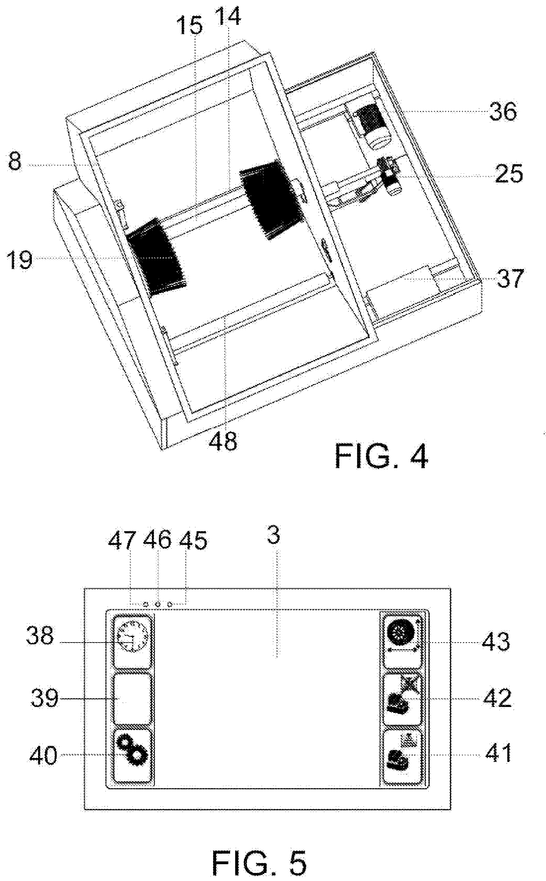

The rear side of the mount (5) of the machine includes a water inlet (32), a pneumatic connection (31), a connection to the mains supply (3), and a connection for draining the water (33), while the cover (2) includes a glass window (1) to allow the interior to be seen, i.e. the washing chamber (8), by means of two halogen lamps (17), shown in figure 1, which, in addition to the cover (2) of the washing chamber (8), includes another cover (6) on the side to protect the different actuation means, consisting of a reducer motor (25-29), a motor pump for creating pressurized water (36), a junction box for electrical connections (37) and other means associated to these means, including a side cover (6) an emergency stop button (4) and the corresponding touchscreen (3), as one of the fundamental features of the machine of the invention, the touch screen (3) that is shown in figure 5, with LEDs (45, 46, 47), elements for indicating power supply to the screen, power supply to a CPU the machine uses, and communication with a PLC, respectively, also including the windows corresponding to a button (43) to position the brushes (16), a button (42) for washing without detergent, a button (4) for washing with detergent, a button (39) for stopping the washer, a button (38) to access the timers, and a button (40) corresponding to different configurations of the machine, among other actions and functions it may perform.

## Claims

1. Machine for automatically washing vehicle wheels, said machine comprising a mount (5) with a washing chamber (8) established therein, in which the wheel to be washed is to be placed, the interior of the washing chamber being equipped with water spray nozzles (18) and detergent spray nozzles (20), as well as rotating brushes (16, 19) to clean the sides of the wheel, furthermore including a pair of rotating rollers (15, 48) to support the wheel and rotate it inside the washing chamber (8), wherein the machine further comprises a touch screen (3) to control and regulate the different functions of the machine, including, on its rear side, a direct intake from the water supply network (32), a connection to a pneumatic system (31), and the corresponding electrical outlet (30), as well as a connection for a drain spout (33); wherein the rotating brushes (16, 19) are mounted in such a way that the height is adjustable by activating a motor connected to a slider base (49) and a sliding lever (27), as well as a sliding cylinder (24) and a lifting cylinder (28) for lifting the assembly;
wherein the washing chamber (8) comprises a cover (2) associated with a pair of pneumatic dampers for the opening, closing and maintenance of said cover (2) in its position; **characterized in that** the sliding cylinder (24) and the lifting cylinder (28) are connected to an air regulator (22) for proper operation;
wherein the cover (2) includes a glass window (1) to allow the interior of the washing chamber (8) to be seen, by means of two halogen lamps (17).

2. Machine for automatically washing vehicle wheels, according to claim 1, **characterized in that** the first rotating roller (48) that supports the wheel is activated by a motor (29) that, through the shaft of the same roller, activates the brush (19) of the washing chamber (8), while the second rotating roller (15) supporting the wheel to be washed is activated by means of the transmission of a belt pulley.

3. Machine for automatically washing vehicle wheels according to the preceding claims, **characterized in that** the touch screen (3)comprises lights (45, 46, 47) which indicate the power supply to the screen itself, the power supply to a CPU incorporated into the machine, and communication with a PLC, respectively, said touch screen (3) also including windows corresponding to a button (43) to position the brushes (16), buttons (41-42) for washing with or without detergent, respectively, a button (39) for stopping the washer, a button (38) for accessing the timers, and a button (40) corresponding to different machine configurations.

4. Machine for automatically washing vehicle wheels according to claim 1, **characterized in that** the washing chamber (8) further comprises a side cover (6) on the side to protect the different actuation means, consisting of a reducer motor (25-29), a motor pump for creating pressurized water (36), a junction box for electrical connections (37).

5. Machine for automatically washing vehicle wheels according to claim 4, **characterized in that** the side cover (6) further includes an emergency stop button (4) and the touch screen (3).

## Patentansprüche

1. Maschine zum automatischen Waschen von Fahrzeugrädern, wobei die Maschine ein Gestell (5) mit einer darin gebildeten Waschkammer (8) aufweist, in der das zu waschende Rad anzuordnen ist, wobei das Innere der Waschkammer mit Wassersprühdüsen (18) und Reinigungsmittelsprühdüsen (20) sowie rotierenden Bürsten (16, 19), um die Seiten des Rads zu reinigen, ausgestattet ist, ferner ein Paar rotierende Rollen (15, 48) aufweist, um das Rad zu tragen und es in der Waschkammer (8) zu drehen, wobei die Maschine ferner einen Berührungsbildschirm (3) aufweist, um die verschiedenen Funktionen der Maschine zu steuern und einzustellen, und an ihrer Rückseite einen direkten Einlass aus dem Wasserversorgungsnetz (32), einen Anschluss an ein pneumatisches System (31) und den entsprechenden elektrischen Anschluss (30) sowie einen Anschluss für ein Ablauf (33) aufweist; wobei die rotierenden Bürsten (16, 19) auf eine solche Weise angebracht sind, dass die Höhe durch Aktivieren eines Motors anpassbar ist, der mit einer Schieberbasis (49) und einem Schiebehebel (27) sowie einem Schiebezylinder (24) und einem Hebezylinder (28) zum Heben der Anordnung verbunden ist;
wobei die Waschkammer (8) einen Deckel (2) aufweist, der mit zwei pneumatischen Dämpfern versehen ist, um den Deckel zu öffnen, schließen und in seiner Position zu halten;
**dadurch gekennzeichnet, dass** für einen einwandfreien Betrieb der Schiebezylinder (24) und der Hebezylinder (28) mit einem Luftregler (22) verbunden sind;
wobei der Deckel (2) ein Glasfenster (1) aufweist, so dass mithilfe von zwei Halogenlampen (17) das Innere der Waschkammer (8) zu sehen ist.

2. Maschine zum automatischen Waschen von Fahrzeugrädern nach Anspruch 1, **dadurch gekennzeichnet, dass** die erste rotierende Rolle (48), die das Rad trägt, von einem Motor (42) aktiviert wird, der durch die Welle der gleichen Rolle die Bürste (19) der Waschkammer (8) aktiviert, während die zweite rotierende Rolle (15), die das zu waschende Rad trägt, mithilfe der Transmission einer Riemenscheine aktiviert wird.

3. Maschine zum automatischen Waschen von Fahrzeugrädern nach den vorstehenden Ansprüchen, **dadurch gekennzeichnet, dass** der Berührungsbildschirm (3) Lämpchen (45, 46, 47) aufweist, die die Energieversorgung zu dem Bildschirm selbst, die Energieversorgung zu einer in der Maschine eingebauten CPU bzw. eine Kommunikation mit einer SPS anzeigen, wobei der Berührungsbildschirm (3) zudem Fenster aufweist, die einem Schaltfeld (43) zum Positionieren der Bürsten (16), Schaltfeldern (41-42) zum Waschen mit bzw. ohne Reinigungsmittel, einem Schaltfeld (39) zum Stoppen der Maschine, einem Schaltfeld (38) zum Zugriff auf Zeitfunktionen und einem Schaltfeld (40) für verschiedene Maschinenkonfigurationen entsprechen.

4. Maschine zum automatischen Waschen von Fahrzeugrädern nach Anspruch 1, **dadurch gekennzeichnet, dass** die Waschkammer (8) auf der Seite ferner eine Seitenabdeckung (6) aufweist, um verschiedene Betriebseinrichtungen, bestehend aus einem Reduziermotor (25-29), einer Motorpumpe zur Erzeugung von Druckwasser (36) und einen Anschlusskasten für elektrische Anschlüsse (37) zu schützen.

5. Maschine zum automatischen Waschen von Fahrzeugrädern nach Anspruch 4, **dadurch gekennzeichnet, dass** die Seitenabdeckung (6) ferner eine Notstopptaste (4) und den Berührungsbildschirm (3) aufweist.

## Revendications

1. Machine pour le lavage automatique de roues de véhicule, ladite machine comprenant un bâti (5) avec une chambre de lavage (8) établie à l'intérieur de celui-ci, dans laquelle la roue à laver doit être placée, l'intérieur de la chambre de lavage étant équipé de buses de pulvérisation d'eau (18) et de buses de pulvérisation de détergent (20), ainsi que de brosses rotatives (16, 19) pour nettoyer les côtés de la roue, comprenant en outre une paire de rouleaux rotatifs (15, 48) pour supporter la roue et la faire tourner à l'intérieur de la chambre de lavage (8), la machine comprenant en outre un écran tactile (3) pour commander et réguler les différentes fonctions de la machine, comprenant, sur son côté arrière, une admission directe à partir du réseau d'alimentation en eau (32), un raccordement à un système pneumatique (31), et la prise électrique correspondante (30), ainsi qu'un raccordement pour un embout d'évacuation (33) ; les brosses rotatives (16, 19) étant montées d'une manière telle que la hauteur est ajustable par activation d'un moteur relié à une base de coulisseau (49) et un levier de coulissement (27), ainsi qu'un vérin de coulissement (24) et un vérin de levage (28) pour lever l'ensemble ;
la chambre de lavage (8) comprenant un couvercle (2) associé à une paire d'amortisseurs pneumatiques pour l'ouverture, la fermeture et l'entretien dudit couvercle (2) dans sa position ;
**caractérisée par le fait que** le vérin de coulissement (24) et le vérin de levage (28) sont reliés à un régulateur d'air (22) pour un fonctionnement approprié ;
le couvercle (2) comprenant une vitre (1) pour permettre de voir l'intérieur de la chambre de lavage (8), au moyen de deux lampes halogènes (17).

2. Machine pour le lavage automatique de roues de véhicule selon la revendication 1, **caractérisée par le fait que** le premier rouleau rotatif (48) qui supporte la roue est activé par un moteur (29) qui, par l'intermédiaire de l'arbre du même rouleau, active la brosse (19) de la chambre de lavage (8), tandis que le second rouleau rotatif (15) supportant la roue à laver est activé au moyen de la transmission d'une poulie à courroie.

3. Machine pour le lavage automatique de roues de véhicule selon les revendications précédentes, **caractérisée par le fait que** l'écran tactile (3) comprend des témoins (45, 46, 47) qui indiquent l'alimentation électrique vers l'écran lui-même, l'alimentation électrique vers une unité centrale de traitement incorporée dans la machine, et une communication avec un contrôleur programmable, respectivement, ledit écran tactile (3) comprenant également des fenêtres correspondant à un bouton (43) pour positionner les brosses (16), des boutons (41-42) pour un lavage avec ou sans détergent, respectivement, un bouton (39) pour arrêter le lavage, un bouton (38) pour accéder aux minuteries, et un bouton (40) correspondant à différentes configurations de machine.

4. Machine pour le lavage automatique de roues de véhicule selon la revendication 1, **caractérisée par le fait que** la chambre de lavage (8) comprend en outre un couvercle latéral (6) sur le côté pour protéger les différents moyens d'actionnement, consistant en un motoréducteur (25-29), une motopompe pour créer de l'eau mise sous pression (36) et une boîte de connexion pour raccordements électriques (37).

5. Machine pour le lavage automatique de roues de véhicule selon la revendication 4, **caractérisée par le fait que** le couvercle latéral (6) comprend en outre un bouton d'arrêt d'urgence (4) et l'écran tactile (3).
